# EUROPEAN PATENT APPLICATION

(11) **EP 4 763 958 A1**
(43) Date of publication of application: **24.06.2026**
(21) Application number: 24220595.3
(22) Date of filing: 17.12.2024
(51) Int. Cl.: C10M 171/06, B82Y 40/00, C10N 20/02, C10N 20/06, C10N 20/00, C10N 30/06

(54) **PREPARATION OF GLYCEROL NANOCAPSULES AND THEIR USE AS ADDITIVE IN A HYDROPHOBIC LUBRICANT**

(71) Applicant: FUCHS SE, 68169 Mannheim (DE); Max-Planck-Gesellschaft zur Förderung der Wissenschaften e.V., 80539 München (DE)
(72) Inventor: KRAFT, Gunther, 68169 Mannheim (DE); HARPERSCHEID, Manfred, 68169 Mannheim (DE); LUTHER, Rolf, 68169 Mannheim (DE); LANDFESTER, Katharina, 55128 Mainz (DE)
(74) Representative: mepat Patentanwälte

(57) **Abstract**

The invention herein disclosed refers to a method for preparation of glycerol nanocapsules (GNCs), adapted as an additive in a hydrophobic lubricant for improving lubricity in a tribological system, further to a glycerol nanocapsule (GNC) and finally to the respective use. The method comprises the steps of providing a continuous phase comprising at least a polyalphaolefin (PAO) and a dispersed phase comprising at least glycerol (GLY), of - mixing the continuous phase and the dispersed phase and performing high-pressure homogenization with a microfluidizer resulting in a minielmulsion comprising glycerol nanodroplets (GNPs). Further, adding a diisocyanate crosslinking agent (TDI) to the miniemulsion is comprised, leading to a polymerization reaction of the diisocyanate crosslinking agent (TDI) and glycerol (GLY) at the interfaces of the glycerol nanodroplets (GNPs) dispersed in the polyalphaolefin (PAO), resulting in formation of crosslinked glycerol-based polyurethan shells encapsulating a core of unreacted glycerol (GLY). Thereby glycerol nanocapsules (GNCs) are obtained, comprising a core of unreacted glycerol (GLY) encapsulated in a crosslinked glycerol-based polyurethan shell.

## Description

The invention relates to a method for preparation of glycerol nanocapsules, which are adapted or designed, respectively, as an additive in a hydrophobic lubricant for improving lubricity in a tribological system. Further the invention relates to the glycerol nanocapsules and the use of the glycerol nanocapsules as an additive in a hydrophobic lubricant for improving lubricity in a tribological system.

Friction causes about 20 % of the energy consumption worldwide, while the resulting wear consumes additional energy and resources for remanufacturing worn parts. To reduce the economic losses caused by undesirable friction and improve lubricants performances, it is crucial to understand the interaction of lubricant molecules at the material interfaces. In recent years, the rapid growth of modern technologies, especially in aerospace, electric vehicles and other high-tech industries, has led to a growing demand for oils with superior performance, to lubricate and to maximize energy efficiency and system durability.

The ideal lubricant system would reduce friction and wear until they nearly vanish, or, more reasonably, to the point where a coefficient of friction (CoF) below 0.01 is achieved. This concept, known as "superlubricity", was introduced in 1990 by Motohisa Hirano and Kazumasa Shinjo. Since then, several types of promising superlubricating materials have been discovered, including solid lubricants, liquid lubricants, and solid additive/liquid lubricant systems. Developing such materials for practical implementation that can meet the modern demands of emerging technologies remains a challenge.

During the last decade, smart lubricating materials have sparked immense interest as potential additives for lubricants. For example, hybrid composites containing smart micro/nanocontainers made of poly(melamine-formaldehyde), polysulfone, poly(ureaformaldehyde) and polystyrene filled with liquid lubricants have been used as solid lubricant. The rational design of these microcapsules enables the system to respond to environmental changes providing enhanced lubrication performance. While the oils released from the broken capsules at the contact surface provide lubrication, the residual composites subsequently protect the cracks to slow down abrasion or corrosion of the surface.

On the other hand, studies on smart materials for liquid lubricants remain scarce, as only a limited number of such materials have been synthesized. The key challenge is to achieve uniform dispersion, however, agglomeration and precipitation of additives in base lubricant fluids is often observed and inevitably leads to a loss of efficacy. To circumvent agglomeration and precipitation, the addition of unwanted surfactants or additional dispersing steps may be required, which can disrupt the properties of the base oil to circumvent agglomeration and precipitation.

Therefore, the driving forces for further advances in this research area are not only the material design targeting improved properties, but also the incorporation of the functional materials into base oils without any loss of their efficiency.

Superlubricity, a state where friction is virtually non-existent, mitigates uneconomical energy losses caused by mechanical movements. Glycerol exhibits excellent superlubrication properties, especially in combination with inert coatings. The addition of glycerol to existing oil-based lubricants is a promising approach to maximize lubricity. However, miscibility issues hamper the use of hydrophilic glycerol as an additive in hydrophobic lubricant base oils.

Smart materials that can achieve superlubricity would become a powerful and flexible tool to develop a new class of high-performance liquid lubricating systems. Unfortunately, this concept has never been reported. The major roadblocks are the intricate composition of lubricant formulations and the complexity of the mechanical, physical and chemical interactions at moving interfaces. Previously, mechanoresponsive nanocarriers based on sponge-like glycerol nanoparticles have been developed. The encapsulation of glycerol into these nanocarriers allowed us to overcome the limited miscibility of glycerol in hydrophobic lubricant oils and extended the life of glycerol, which can deteriorate through oxidation. The release of glycerol from these particles was mechanically triggered and allowed for a reduction in friction of lubricant formulations at steel/steel contacts. Since these crosslinked glycerol particles were hard, they remained intact even under high loads, and superlow friction coefficients could not be achieved. Moreover, the synthesis and transfer steps needed with these nanocarriers made their large-scale production challenging.

Referring to the state of the art it is an object of the invention to provide an improved preparation method for glycerol nanocapsules.

This object is achieved with the method showing the features of independent claim 1.

A further object is the provision of glycerol nanocapsules adapted as additive in a hydrophobic lubricant.

This object is achieved with the glycerol nanocapsules with the features of independent claim 10.

A still further object is improving lubricity in a tribological system.

This object is achieved by the use of glycerol nanocapsules, said use showing the features as depicted in independent claim 11.

Preferred embodiments of the improved preparation method for glycerol nanocapsules, of the glycerol nanocapsules adapted as additive in a hydrophobic lubricant and of the use of such glycerol nanocapsules are specified in the respective dependent claims.

According to a first embodiment of the method according to the invention for preparation of glycerol nanocapsules adapted or designed, respectively, as additive in a hydrophobic lubricant for improving lubricity in a tribological system, said method comprises the steps of
- providing a continuous phase comprising at least a polyalphaolefin and a dispersed phase comprising at least glycerol,
- mixing the continuous phase and the dispersed phase and performing high-pressure homogenization with a microfluidizer resulting in a minielmulsion comprising glycerol nanodroplets,
- adding a diisocyanate crosslinking agent to the miniemulsion leading to a polymerization reaction of the diisocyanate crosslinking agent and glycerol at the interfaces of the glycerol nanodroplets dispersed in the polyalphaolefin, resulting in formation of crosslinked glycerol-based polyurethan shells encapsulating a core of unreacted glycerol, thereby
- obtaining glycerol nanocapsules comprising a core of unreacted glycerol encapsulated in a crosslinked glycerol-based polyurethan shell.

The below abbreviations are used herein and mean the following:
CoF: Coefficients of friction;
GNC: Glycerol nanocapsule;
PAO: Polyalphaolefin;
GLY: Glycerol;
PGPR: Polyglycerol polyricinoleate;
CG: Crosslinked Glycerol;
SEM: Scanning electron microscopy;
SST: Stainless steel;
Ta-C: Tetrahedral amorphous carbon;
TDI: Toluene diisocyanate;
TEM: Transmission electron microscopy;
XPS, X-ray photoelectron spectroscopy;
EDS: Energy-dispersive X-ray spectroscopy.

This method is adapted and suits perfectly for large scale production and for providing glycerol nanocapsules with improved morphology appearing in a defined shell structure with spherical shape.

According to another embodiment of the method according to the invention the polyalphaolefin has a kinematic viscosity at 25 °C of at least 6 mPa·s.

A further embodiment of the method according to the invention provides adjusting of mechanical properties of the glycerol nanocapsules by varying a content of the diisocyanate crosslinking agent and/or varying the temperature of the polymerization reaction results in an altered core-to-shell ratio of the obtained glycerol nanocapsules.

According to another embodiment of the method according to the invention the content of the diisocyanate crosslinking agent is selected, so that the ratio of NCO-groups of the diisocyanate crosslinking agent and OH-groups of glycerol (NCO:OH ratio) is 0.2:1 to 1:1.

According to still another embodiment of the method according to the invention, the diisocyanate crosslinking agent is toluene diisocyanate.

A still further embodiment of the method according to the invention is characterized in that the continuous phase further comprises a surfactant, which preferably is polyglycerol polyricinoleate.

According to still another embodiment of the method according to the invention, the dispersed phase further comprises water and calcium chloride mixed with the glycerol.

According to further embodiments of the method according to the invention,
- the mixture of the continuous phase and the dispersed phase is pre-emulsified before high-pressure homogenization is performed, preferably for 15 min by an Ultra-Turrax at 15.000 rpm, and/or
- the high-pressure homogenization is performed at a pressure of 10.000 PSI for 2-3 cycles, and/or
- the miniemulsion is stirred, preferably at 450 rpm, before the diisocyanate crosslinking agent is added, and/or
- adding of the diisocyanate crosslinking agent to the miniemulsion is performed dropwise, and/or
- the glycerol nanocapsules are purified by centrifugation, preferably in two cycles at 2000 rpm for 10 min, to remove toluene and diisocyanate unreacted crosslinking agent and then re-dispersed in a lubricant, preferably a polyalphaolefin.

According to still another embodiment of the method according to the invention, the temperature of the polymerization reaction ranges from 5 °C to 37 °C.

A glycerol nanocapsule according to the invention comprises a core of unreacted glycerol encapsulated in a crosslinked glycerol-based polyurethan shell and is producible by the inventive method according to at least one of the above embodiments.

The present invention also refers to a use of the inventive glycerol nanocapsules as an additive in a hydrophobic lubricant for improving lubricity in a tribological system.

According to a preferred embodiment of the use according to the invention, the tribological system comprises surfaces with diamond-like carbon coatings, preferably tetrahedral amorphous carbon coatings, wherein superlubricity is obtained by combining glycerol nanocapsules added in the lubricant and the diamond-like carbon coatings, preferably tetrahedral amorphous carbon coatings.

So, an ideal smart superlubricating material is provided, based on a new strategy centered around the control of particle morphology and the combination of the resulting additive with diamond like carbon and tetrahedral amorphous carbon (Ta-C) coatings, resp., since pure glycerol is an effective lubricant for Ta-C coated steels to achieve superlubricity. The ultra-low friction derives from the sliding interface of the partially oxidized ultrathin graphene-like film and the easy-to-shear layers formed via tribochemical reactions of glycerol.

Advantageously, the glycerol nanocapsules prepared by the inventive method are dispersible in hydrophobic oils and contain unreacted glycerol as a payload inside a cross-linked glycerol-based polyurethane shell. This in-situ synthesis uses inverse miniemulsion polymerization inside lubricant base oils to obtain nanocapsules with a distinct core-shell morphology. This significantly increases the glycerol loading capacity of the inventive nanocapsules compared to previously reported sponge-like nanoparticles. Without wishing to be bound by theory the formation of a distinct shell is attributed to higher interfacial tensions and increased viscosities inside the lubricant base oils, limiting the polyaddition reaction to the interface of the glycerol droplets. Varying the crosslinker content and the reaction temperature alters the core-to-shell ratio of the capsules, which in turn affects the Young's Modulus, the breaking force and the quantity of encapsulated glycerol. Consequently, the observed lubricity of the formulated lubricants at the tribological contact can be systematically tuned. Ultimately, these novel thinshelled "ultra-soft" glycerol nanocapsules provide superlubricity (CoF < 0.01) when combined with diamond-like carbon-coated surfaces, bringing us closer to ideal frictionless movements under real-life operating conditions.

Other objects as well as further advantages associated therewith and further embodiments of the present invention will be readily appreciated and become better understood by the following more detailed description of preferred embodiments reference to the accompanied figures. Features that are substantially or functionally equal or similar will be referred to with the same reference sign(s).

The figures show:
- **Fig. 1**: Schematic depiction of the steps in the formation of glycerol nanocapsules (GNCs) in oil-based lubricants via interfacial polyaddition,
- **Fig. 2**: Schematic depictions of a glycerol nanodroplet (GNP) after microfluidization and of a GNC after crosslinking,
- **Fig. 3**: Crosslinking reaction with indicated crosslink positions in glycerol molecule,
- **Fig. 4**: SEM images of GNPs and GNCs prepared in different solvents; (a) toluene, (b) toluene/PAO2, (c) PAO2 and (d) PAO8 with their images of dialyzed capsules (inset I. TEM and inset II. SEM) showing non-hollow and hollow structures (reaction temperature 37 °C, NCO:OH = 1:1), scale bar of the inset is 0.2 µm,
- **Fig. 5**: SEM images of GNCs prepared in PAO2 at different NCO:OH ratios at reaction temperatures of 25 °C (i-v) and 37 °C (vi-x),
- **Fig. 6**: diagram depicting conversion of glycerol to GNCs from -OH to - O-R in the droplets by ¹³C NMR at different NCO:OH ratios at reaction temperatures of 25 °C and 37 °C,
- **Fig. 7**: diagram depicting composition of substances in the as-prepared GNCs analyzed by TGA prepared in PAO2 at different NCO:OH ratios and at different reaction temperatures,
- **Fig. 8**: schematic of experimental approach with force-indentation curves showing each step of particle deformation during AFM nanoindentation,
- **Fig. 9**: 3D images of one capsule before and after mechanical failure by AFM nanoindentation,
- **Fig. 10**: schematic depiction of GNCs with different conversion,
- **Fig. 11**: diagram depicting Young's modulus and breaking force of GNCs with different conversions,
- **Fig. 12**: diagram depicting normalized coefficient of friction plotted against the breaking forces of GNCs in tribological measurements of the suspension of GNCs (15 wt%) in PAO2 tested with the uncoated SST plates at different axial forces,
- **Fig. 13**: images of wear scar as the result of a tribological measurement on uncoated SST plates of i) PAO2 and ii) GNCs (52% conversion) in PAO2 at 15 N with the corresponding wear track profiles,
- **Fig. 14**: diagram depicting wear scar areas plotted against the breaking forces of GNCs,
- **Fig. 15**: diagram depicting coefficient of friction of pure glycerol and GNCs (10% in PAO2) with different conversions on Ta-C coated steels/SST ball tribopairs as a function of number of cycles,
- **Fig. 16**: diagram depicting coefficient of friction of pure glycerol and GNCs (10% in PAO2) with different conversions on Ta-C coated steels/SST ball tribopairs as a function of sliding speed (applied force 15 N, temperature 80 °C),
- **Fig. 17**: images of wear scar as a result of a tribological measurement on Ta-C steel plates of i) pure glycerol, ii) GNCs in PAO2 (NCO:OH = 0.1:1, 14% conversion) and iii) GNCs in PAO2 (NCO:OH = 0.2:1, 24% conversion) at 15 N, 80 °C, slid- ing speed 0.01-270 mm/s over 50 cycles and iv-vi) wear track profiles of the wear scars from i-iii),
- **Fig. 18**: XP spectrum of C1s peak outside wear area of Ta-C steel plates after tribological tested with the soft GNCs (NCO:OH = 0.1:1, 10%wt) formulated in PAO2 and the summary of chemical species,
- **Fig. 19**: XP spectrum of C1s peak inside wear area of Ta-C steel plates after tribological tested with the soft GNCs (NCO:OH = 0.1:1, 10%wt) formulated in PAO2 and the summary of chemical species,
- **Fig. 20**: XPS spectrum of O1s peak outside wear area of Ta-C steel plates after tribological tested with the soft GNCs (NCO:OH = 0.1:1, 10%wt) formulated in PAO2 and the summary of chemical species,
- **Fig. 21**: XP spectrum of O1s peak inside wear area of Ta-C steel after being tested with the soft GNCs (NCO:OH = 0.1:1, 10%wt) formulated in PAO2 and the summary of chemical species,
- **Fig. 22**: diagramm depicting summary of chemical species at C1s peak observed on Ta-C steel (control, before tribo-test) and Ta-C steels after tribo-tested with pure glycerol and soft GNCs in PAO2,
- **Fig. 23**: diagramm depicting summary of chemical species at O1s peak observed on Ta-C steel (control, before tribo-test) and Ta-C steels after tribo-tested with pure glycerol and soft GNCs in PAO2,
- **Fig. 24**: depictions showing mechanism of superlubricity of GNCs dispersed in PAO on an SST/Ta-C coated SST tribo-pair,
- **Fig. 25**: diagrams depicting effects of reaction temperatures on the conversion of glycerol to crosslinked glycerol in the capsules formed in toluene (I) and in PAO2 (II) by TGA,
- **Fig. 26**: diagram depicting conversion by ¹³C NMR at each crosslink position of glycerol molecule indicated in Fig. 3,
- **Fig. 27**: ¹³C NMR spectra of glycerol and of GNC prepared at different temperatures (5, 25, 37 °C), depicting the temperature dependent crosslinking (NCO:OH ration 1:1),
- **Fig. 28**: SEM images of GNCs prepared by microfluidization in PAO2 at different temperatures (a) 5 °C, (b) 25°C, (c) 30°C, and (d) 37°C,
- **Fig. 29**: diagram depicting particle size distribution of GNCs prepared by microfluidization in PAO2 at different temperatures,
- **Fig. 30**: AFM images of the single particle of sponge-like glycerol nanoparticles (upper row, prepared in toluene) and glycerole nanocapsules (lower row, prepared in PAO2) after being approached by the cantilever at different forces,
- **Fig. 31**: AFM images of a single GNC (30% conversion) on a silicon wafer before and after breaking and their 2D extracted profiles,
- **Fig. 32**: SEM images and surface topology by AFM of (a, c) polished SST plate and (b, d) Ta-C coated SST plate,
- **Fig. 33**: diagram depicting coefficient of friction for comparison between uncoated an Ta-C coated SST on CoF of pure glycerol and GNCs (conv. 44%, 15%wt) as a function of sliding speed, applied force 15 N, 25 cycles at 25°C,
- **Fig. 34**: diagram depicting coefficient of friction of pure glycerol tested at different temperatures on Ta-C coated steels as a function of sliding speed, applied force 15 N, 50 cycles,
- **Fig. 35**: SEM-EDS image of Ta-C coated steel before tribo-test,
- **Fig. 36**: ED spectrum showing main chemical composition of surface area marked in Fig. 35,
- **Fig. 37**: SEM-EDS image of Ta-C coated steel after tribo-test with GNCs suspension (conv. 24%, 10%wt in PAO2),
- **Fig. 38**: ED spectrum showing main chemical composition of surface area inside wear scar marked (1) in Fig. 37,
- **Fig. 39**: ED spectrum showing main chemical composition of surface area inside wear scar marked (2) in Fig. 37,
- **Fig. 40**: ED spectrum showing main chemical composition of surface area outside wear scar marked (3) in Fig. 37,
- **Fig. 41**: schematic drawing of GNC containing C, N, O.

The invention relates to in-situ synthesized glycerol-releasing nanocapsules and uses of the aforesaid to unlock superlubricity in oil-based lubricants.

In the following the experimental section is described starting with chemicals and materials used in the experiments. Polyalphaolefins (PAO) with different viscosities (PAO2, PAO4 and PAO8) as used herein were obtained from Fuchs Petrolub (Mannheim, Germany). Toluene diisocyanate (TDI, purity>98%) was purchased from TCI Chemicals (Eschborn, Germany); glycerol (purity>99.5%), toluene (purity>99.8%) and cyclohexane (purity>99.5%) from Sigma Aldrich (Taufkirchen, Germany); calcium chloride (anhydrous CaCl2, purity>98%) from Merck (Darmstadt, Germany). All chemicals were used as received from producer. Polyglycerol polyricinoleate (PGPR) from Danisco (Niebüll, Germany) was purified by one-time extraction with cyclohexane before use.

For tribological measurements, the stainless-steel balls (Ø 1.27 cm, TA instruments) were used as received. The uncoated stainless-steel plates (6×15×3 mm, 100Cr6, Anton Paar) were polished before tribological testing by FLP Microfinishing GmbH (RA 47.6 ± 7.3 nm, Rz 463.3 ± 83.5 nm). The Ta-C coated steel plates were prepared by Fraunhofer Institute for Material and Beam Technology IWS (RA 17.2 ± 5.4 nm, Rz 336.9 ± 120.4 nm, Ta-C layer 2.1 µm).

Synthesis of glycerol capsules in lubricating oils was performed as follows:
The continuous phase consisted of a solution of PGPR (1.6 g; 4.1 mmol; 8 g·L⁻¹) acting as a surfactant dissolved in the oil, i.e., PAO2, PAO4 and PAO8 (160 g). Then, the dispersed phase was prepared by mixing glycerol (16 g; 173.74 mmol), Milli-Q water (0.8 g; 44.4 mmol), and CaCl2 (175 mg; 1.58 mmol). The dispersed and the continuous phases were combined, and the mixture was pre-emulsified for 15 min by an Ultra-Turrax at 15000 rpm. After passing through a microfluidizer (LM10, Microfluidic corp.) equipped with an F20Y interaction chamber at a pressure of 10000 PSI for 2-3 cycles, 30 mL of the emulsion was transferred to a round bottom flask with stirring at 450 rpm. The polymerization was started by the dropwise addition of a solution of TDI in toluene. The mixture was allowed to react overnight. The polymerization temperature (5, 20, 25, 30 and 37 °C) and TDI content (6.5-32.5 mmol; NCO:OH ratio = 0.2:1 to 1:1) were tuned in order to obtain glycerol capsules with different loading of unreacted glycerol and varied the mechanical properties of the resulting capsules. The as-prepared glycerol capsules were purified by centrifugation (two cycles, 2000 rpm; 10 min) to remove toluene and unreacted TDI and then re-dispersed in PAO.

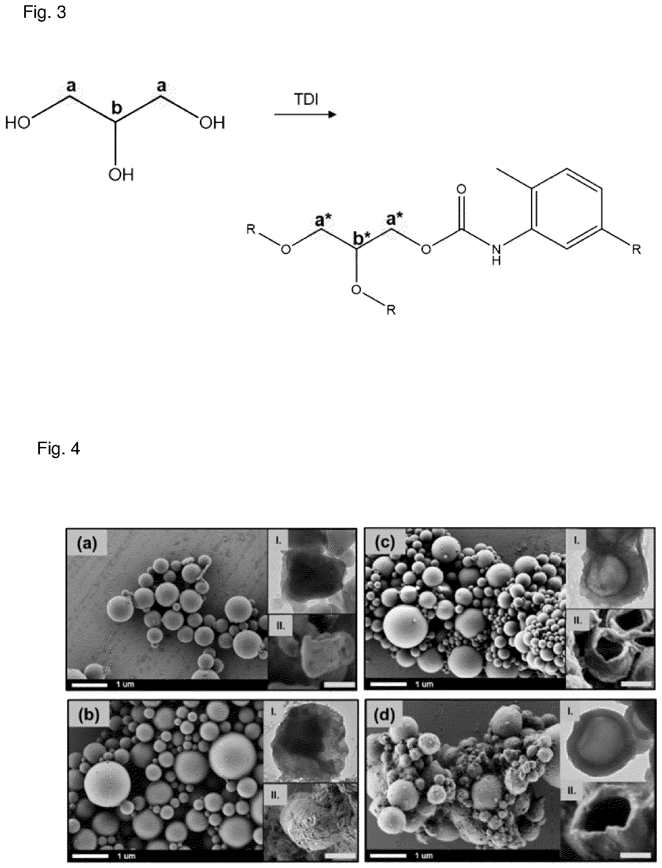

The size of the capsules was characterized by dynamic light scattering (DLS, Malvern Nano-S90) using cyclohexane as a solvent. The conversion from the -OH group of glycerol to -O-R resulting from the crosslinking reaction **(****Figure 3**) was determined by ¹³C-NMR spectroscopy in DMSO-d6 using an inverse gated pulse sequence in a 500 MHz or 700 MHz Bruker Avance III NMR spectrometer. Transmission electron microscopy (TEM) was performed with a JEOL JEM-1400 electron microscope and scanning electron microscopy (SEM) with a 1530 Gemini LEO (Zeiss). Thermal gravimetric analysis (TGA) measurements were performed with a TGA3 from Mettler-Toledo. The static interfacial tensions between glycerol and different solvents were measured by tensiometer (DataPhysics DCAT21) with a Wilhelmy plate (PT11) connected to a microbalance. The gravitational force of the interfacial lamella and the interfacial tension was calculated according to the Wilhelmy equation. The advancing contact angle of solvent droplets on spin-coated films of dialyzed capsules was measured by the optical contact angle Goniometer OCA35 Dataphysics.

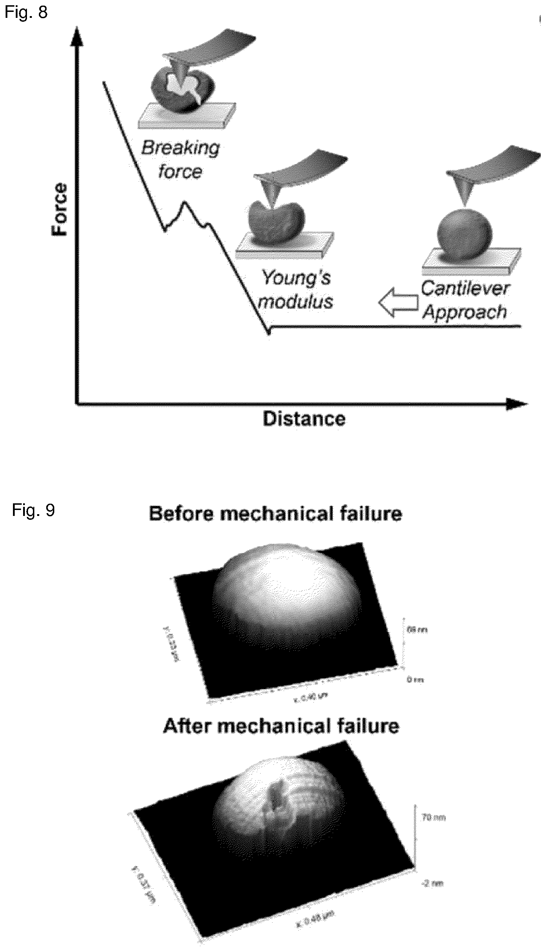

Atomic force microscopy (AFM) measurements were performed with a JPK4 nanowizard AFM equipped with Olympus microcantilevers with a resonance frequency of 70 kHz and a spring constant of 2 N·m⁻¹. The glycerol capsules were deposited on a silicon wafer and imaged by AFM to identify single capsules. To determine the Young's modulus, the substrate surface was scanned in quantitative imaging mode with an applied force of 5 nN for very soft capsules and 10 nN for moderate to hard capsules. For the compression experiments, the force was preset between 100 and 500 nN and the cantilever was moved towards the sample on the z-axis. Once in contact with the GNC, the cantilever continued moving towards the substrate, continuously increasing the force applied to the sample. When the preset force was reached, the cantilever started to retract. Before reaching the preset force, the cantilever usually broke the crosslinked glycerol shell. This event was observed as an abrupt step in the force/distance profile **(****Figure 8****)**.

The tribological measurements were performed using a ball-on-three-plates geometry attached to a rheometer (TA Discovery HR3). A volume of 0.5 mL PAO oil containing different loadings of glycerol capsules was added to the ball-on-three plates geometry, and the CoF was measured as the sliding speed of the steel-ball was ramped up from 1 to 140 mm·s⁻¹ followed by a ramp down from 140 to 1 mm·s⁻¹. For uncoated stainless-steel plates, this cycle was repeated 25 times at 25 °C at different applied forces. For the Ta-C coated steel plates, the speed ramping was studied between 1 and 270 mm·s⁻¹ for 50 cycles (15 h). The temperatures of 25, 50 and 80 °C and the applied force of 15 N were chosen for the test. After the tribological measurements, the wear scars on the Ta-C coated steel plates were analyzed by a µSurf^{™} confocal profilometer from NanoFocus AG with a 20x objective. The chemical compositions inside and outside the worn regions after the friction tests were investigated by SEM-EDS and X-ray photoelectron spectroscopy (XPS) using a Kratos Axis Ultra DLD imaging photoelectron spectrometer. XPS measurements were carried out with a monochromate Al K(alpha) source operating at 10 mA emission current and 15 kV voltage bias in an ultra-high vacuum (UHV) chamber with a base pressure of approximately 1×10e⁻¹⁰ mbar. The full width at half maximum (FWHM) of the source line is approximately 1.0 eV, as calibrated with the Ag 3d5/2 line. A hemispherical analyzer with an angle of 0° to the surface normal was used for data acquisition. The analysis area of 700 µm × 300 µm (i.e., X-ray spot size) was measured at a pass energy of 80 eV for survey spectra and 20 eV pass energy for elemental spectra.

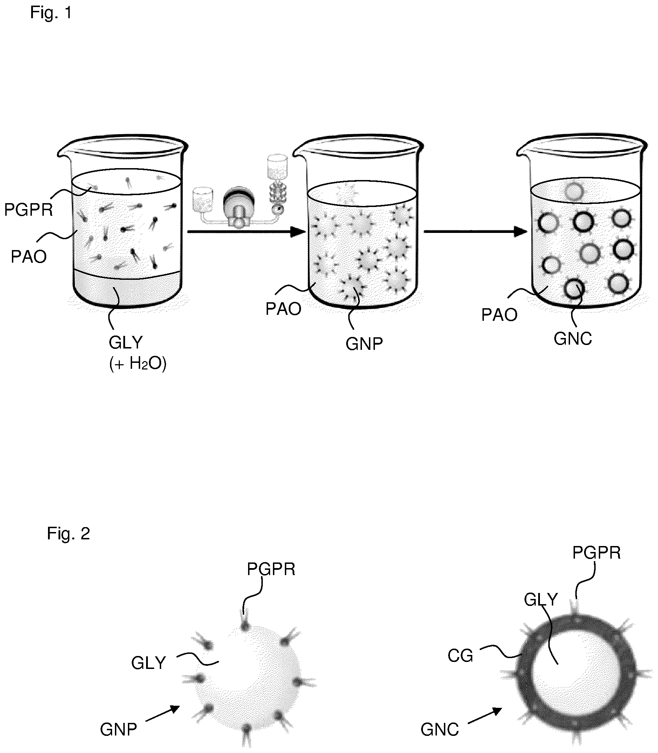

In the following, formation of glycerol nanocarriers in-situ in oil-based lubricants is described. Glycerol nanocarriers were prepared in an inverse miniemulsion. As shown in **Figures 1 and 2****,** the versatile and easily scalable technique of high-pressure homogenization with a microfluidizer²⁴ was used to create a miniemulsion of nanometer-sized glycerol droplets stabilized by polyglycerol polyricinoleate (PGPR). The use of polyalphaolefins (PAOs), a well-established family of lubricant base oils, as the continuous phase resulted in glycerol nanocapsules (GNCs). In this miniemulsion, the polyaddition occurred at the interface of the glycerol nanodroplets when the crosslinking agent, toluene diisocyanate (TDI), was introduced to the continuous phase of the miniemulsion. The interfacial polyaddition between the hydroxyl groups of glycerol and the isocyanate groups of TDI formed a partially crosslinked glycerol-based polyurethane capsule shell containing unreacted glycerol as a payload. Because the GNCs were synthesized in the PAOs, no further solvent transfer was required after purification to obtain an additive-containing oil-based lubricant.

Previously, sponge-like glycerol-based nanoparticles for the encapsulation of liquid glycerol were synthesised by the reaction of glycerol and TDI in miniemulsions with toluene as the continuous phase. Here, the main objective was to improve the ratio of liquid, unreacted glycerol payload to cross-linked glycerol by creating a core-shell morphology and thus increase the volume of liquid, encapsulated glycerol at the same concentration of nanocarriers. Additionally, the previously reported multi-step preparation was simplified and the final phase transfer from toluene to a lubricant base oil was eliminated. Besides toluene, the use of a PAO/toluene mixture and several PAOs was tested as the continuous phase. PAOs, a category of synthetic liquids categorized by their viscosities at 100 °C (PAO2, PAO4, etc.), are produced via the oligomerisation of alphaolefins, due to their well-established properties as lubricant base oils. The morphology of the resulting nanocarriers synthesized with TDI in a NCO:OH ratio of 1:1 with different solvents as the continuous phases are shown in **Figure 4****.**

**Table 1** Properties of glycerol and continuous phases used to synthesize glycerol nanocarriers.

| Substances | Properties of substances | | | | Interfacial tension of glycerol/ continuous (mN/m) phase | | Viscosity of the emulsion (mPa·s, |
|---|---|---|---|---|---|---|---|
| | Viscosity (mPa·s) | | Density (g/cm³) | | | | |
| | 25 °C | 37 °C | 25 °C | 37 °C | 25 °C | 37 °C | 25 °C) |
| *Dispersed phase* | | | | | | | |
| Glycerol | 866.90 | 327.20 | 1.258 | 1.251 | - | - | - |
| *Continuous phase* | | | | | | | |
| Toluene | 0.56 | 0.46 | 0.862 | 0.851 | 20.1 | 20.9 | 1.7-2.7* |
| Toluene/ PAO2 (50:50) | 1.14 | 0.95 | 0.817 | 0.815 | 23.3 | 22.9 | 2.5-6.3* |
| PAO2 | 6.02 | 4.28 | 0.792 | 0.784 | 31.4 | 30.3 | 11.49 |
| PAO4 | 26.53 | 16.31 | 0.813 | 0.806 | 28.7 | 29.4 | 51.20 |
| PAO8 | 77.06 | 43.70 | 0.826 | 0.819 | 29.7 | 29.2 | 135.60 |

| | | | | | | | |
|---|---|---|---|---|---|---|---|
| * low stability of emulsion | | | | | | | |

When using toluene or a mixture of toluene and PAO (50:50) as the continuous phase, the SEM and TEM images **(****Figure 4****,** (a-b)) showed spherical nanoparticles. The intended core-shell structure could not be observed; glycerol nanoparticles with a sponge-like morphology were formed instead. In contrast, a distinct shell of crosslinked polyurethane trapping the unreacted glycerol within the GNCs core was evident in the SEM and TEM micrographs in **Figure 4**(c-d) when pure PAOs of different viscosities were used.

While changing the main component of the continuous phase, all other reaction parameters, such as the volume ratios of both phases, the concentrations of additives and reagents, and the reaction temperature, were kept constant. Therefore, the continuous phase composition is the critical factor for the formation of the different morphologies. However, the different continuous phases screened possess diverse solvencies, densities, viscosities, and interfacial tensions, which can alter the local concentrations and partition coefficients of the monomers, the rate of polymerization and the phase separation of the synthesized polyurethane. The relevant properties of the different continuous phases used, including interfacial tensions and viscosities at the two tested reaction temperatures (25 °C and 37 °C) are presented in **Table 1.**

Overall, the densities of all continuous phases are comparable, while the interfacial tension between glycerol and the continuous phases and the viscosities increase significantly for the PAOs. The temperature has an insignificant effect on the interfacial tension and the density of the substances. Even though the viscosity of each phase decreased drastically with increasing temperature, the absolute viscosities of the PAOs were still four to eighty times higher than the viscosities of toluene and the toluene/PAO2 mixture at 37 °C.

It is evident that the interfacial properties of the system, which are critical for the formation of hollow capsules, depend on the nature of the continuous phase. In addition to the influence of interfacial tension and phase separation, which have been used previously to explain the morphology of latex particles, the different phase viscosities and, thus, the easier mass transport in the continuous phase explain the morphology change observed.

For interfacial polycondensation reactions forming microcapsules/particles it has been proposed that the precipitation rate during the initial reaction period is likely to influence the morphology of the membrane. Since the rate of polymer precipitation is proportional to the reaction rate during the initial period, an increase will prompt faster precipitation, resulting in less uniform membranes with higher permeability. The monomer in the continuous phase has been reported to have a great influence on the reaction kinetics, it is suspected that the high viscosity of the PAOs limits the diffusion of TDI within the continuous phase and thus significantly reduces the reaction rate. Thus, the core-shell morphology may be related to increased viscosity in the continuous phase, which decreased reaction rate and membrane permeability.

The emulsification of highly viscous continuous phase containing a highly viscous dispersed phase such as the high viscosity synthetic oil containing extremely viscous glycerol, is inherently challenging, this work is the first report of a miniemulsion polymerization employing both highly viscous dispersed and continuous phase. As the viscosity of the continuous phase increases, the mechanism of droplet formation changes, the high viscosity leads to the shear forces in elongational flow predominantly disrupting the droplets, the droplet disruption becomes less efficient in comparison to less viscous emulsion, where turbulent flow dominates droplet disruption. Hence, the optimization of the emulsification process is a key factor in achieving a stable miniemulsion that facilitates successful capsule formation. **Table 2** shows the processing parameter adjustments made in emulsification and the observed conversion of the capsules.

Inadequate emulsification was observed for the extremely viscous systems, i.e., glycerol in PAO8, compare to systems where glycerol was emulsified in continuous phase with low viscosity such as toluene or PAO2. While two MF cycles at 10000 PSI were sufficient when using toluene or PAO2 as the continuous phase, glycerol in PAO8 required intensified pressures and more MF cycles to obtain stable miniemulsions. Furthermore, the results show that the total solid content and conversion of glycerol to polyurethane to be optimal when using PAO2 as the continuous phase. The low solid contents obtained in PAO4 and PAO8 suggest insufficient droplet disruption in the MF and the formation of unstable miniemulsion. In these cases changing the high-pressure homogenizing nozzle to a jet disperser or office valve that relies mainly on laminar elongational flow could provide improved processing conditions.

Overall, this one-pot GNC synthesis can potentially be scaled for industrial production as the microfluidization can overcome the typical challenges observed in the upscaling of nanocapsule synthesis like numbering-up leading to large batch-to-batch variety or spiking polydispersity indices (PDIs) with increasing reaction volumes. The in-situ synthesis in lubricant base oils provides well-dispersible nanocapsules in lubricant oils at high solid content without necessitating further solvent transfers and is amenable to a fully in-line production process.

**Table 2 Characterization of GNPs and GNCs prepared in different solvents in terms of total solid content, unreacted -OH by ¹³C NMR and unreacted glycerol by TGA (synthesis at 37 °C, NCO:OH ratio of 1:1)**

| Continuous phase | w/o ratio | Parameters in microfluidizer | | Total solid content | Unreacted -OH by ¹³C-NMR |
|---|---|---|---|---|---|
| | | Pressure (PSI) No. of cycle | | | |
| | | | | (TSC, %) | (mol %) |
| Toluene | 10 | 10,000 | 2 | 10.9 ± 0.1 | 44.4 ± 2.4 |
| Toluene/PAO2 | | | | 11.2 ± 1.2 | 52.4 ± 3.8 |
| PAO2 | 10 | 10,000 | 2 | 11.9 ± 2.0 | 52.0 ± 6.1 |
| PAO2 | 15 | | | 11.0 ± 0.2 | 57.9 ± 5.5 |
| PAO2 | 20 | | | 14.8 ± 0.3 | 60.3 ± 3.5 |
| PAO4 | 10 | 10,000 | 2 | 2.7 ± 0.5 | 56.6 ± 3.8 |
| PAO8 | | 10,000 | 2 | 0.8 ± 0.2 | 59.1 ± 0.9 |
| PAO8 | | 20,000 | 3 | 6.0 ± 1.3 | 54.7 ± 1.8 |

In the following tuning the capsule properties by controlling the reaction at the interfaces is described.

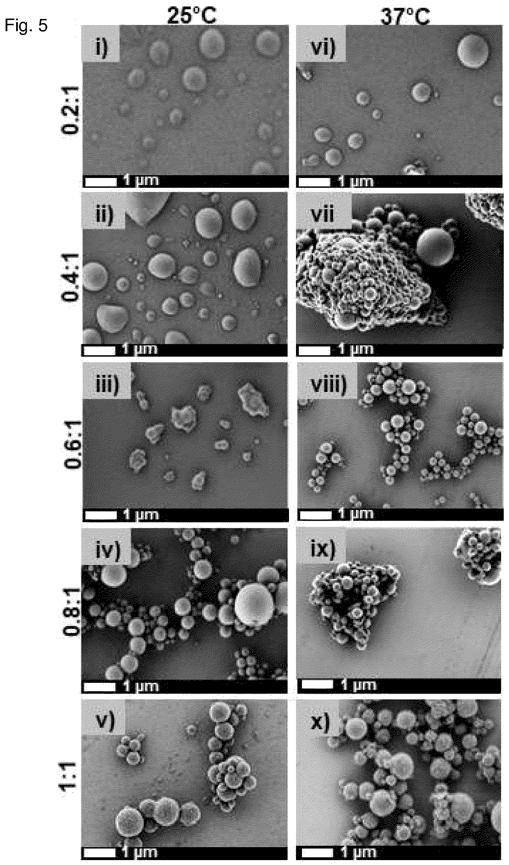

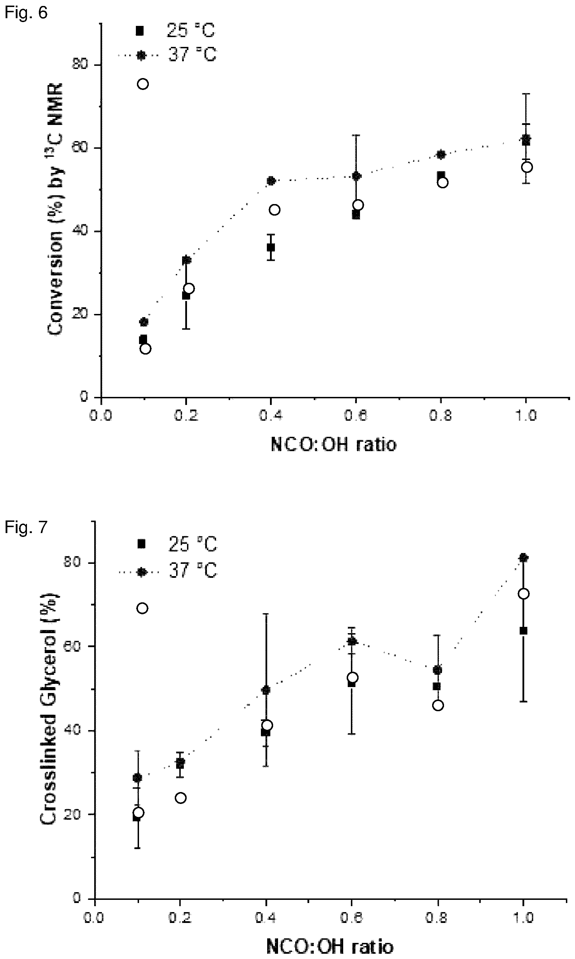

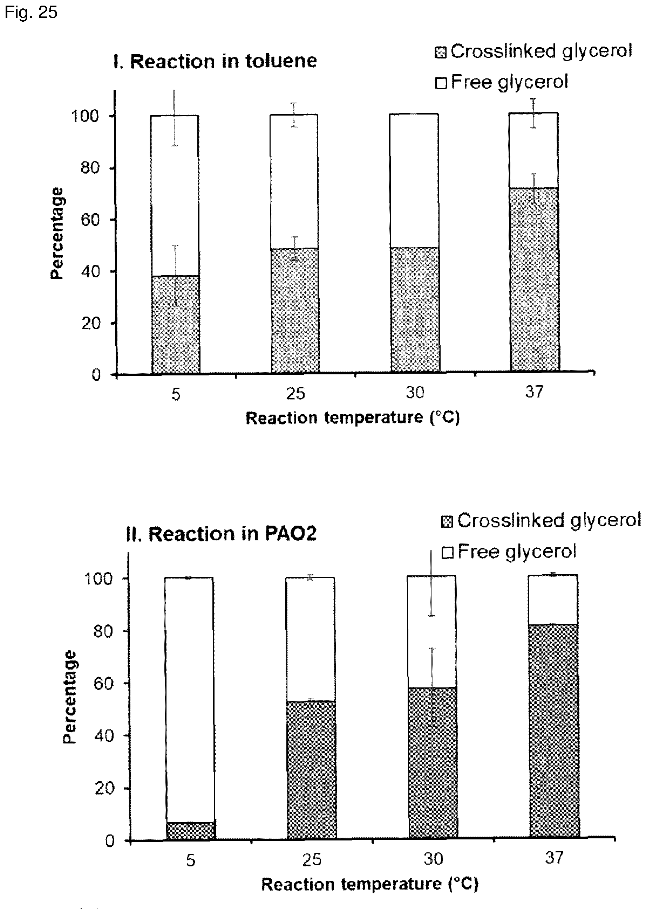

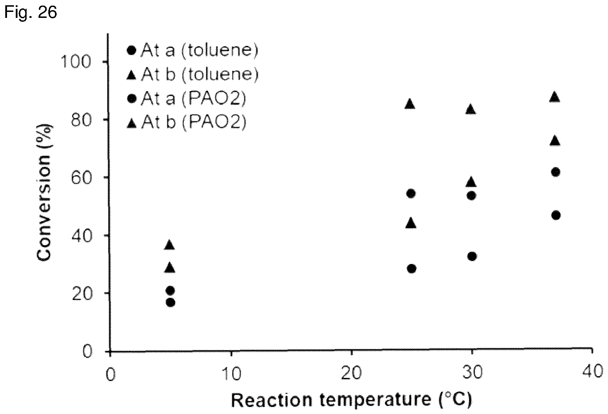

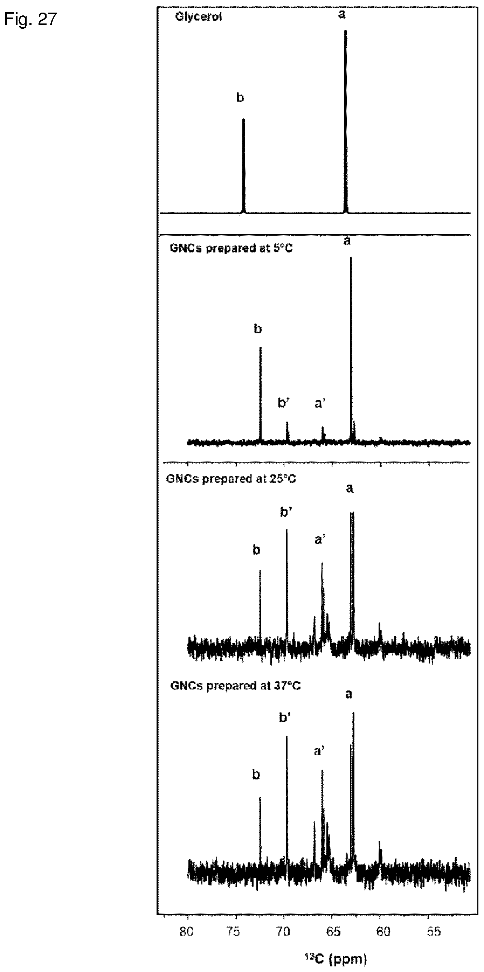

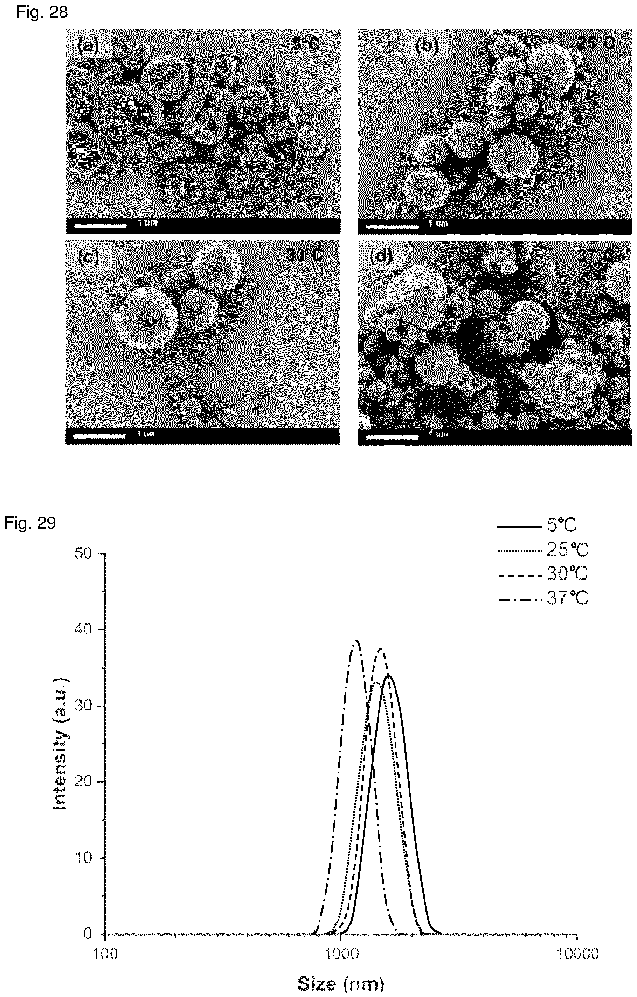

GNCs were designed to control precisely the release of pure glycerol initiated by mechanical stress by tuning the payload amount and shell softness. A library of GNCs was systematically prepared by adjusting reaction temperature and crosslinking ratios, more specifically the ratio of isocyanate groups (NCO) of TDI to hydroxyl groups (OH) of glycerol. It was found that conversion of the polyurethane network was more controlled in PAO2 than in toluene due to the better confined reaction at the interfaces **(****Figure 25** **(I, II)**). **Figure 5** shows SEM images of the as-prepared GNCs and the conversion of glycerol to cross-linked glycerol analysed by ¹³C NMR and TGA. Details of these characterizations can be found in previous work. Spherical integrity, which correlates with the amount of cross-linked glycerol in the shell, can be observed in SEM images. Soft and collapsed capsules were observed at low NCO:OH ratios, while intact and non-collapsed capsules were observed at high NCO:OH ratios **(****Figure 5****).** An increase in conversion of the crosslinked glycerol was observed with increase in reaction temperature and the crosslinker content **(****Figures 26****,** **27****,** **Figures 28, 29** and **Figures 6, 7****)).** At higher temperature, faster diffusion of TDI increases the reaction rate, leading to higher conversion due to increased permeability of the formed polyurethane membrane similar to the effect in less viscous systems. Controlling the polymerization conditions allowed to prepared GNCs with a wide range of compositions/properties. The glycerol loading capacity of the inventive nanocapsules was significantly increased compared to previously reported sponge-like nanoparticles.

Atomic force microscopy (AFM) nanoindentation was used to measure the Young's modulus of individual and isolated GNCs with varying NCO:OH ratio and their breaking force. Quantitative imaging mode provided information on a force-displacement curve at each image pixel. A Derjaguin, Müller and Toporov model (DMT) was used to calculate the Young's modulus at each pixel of the GNCs, from which the average Young's modulus was calculated. Subsequently, the GNCs were compressed by the AFM cantilever tip using a higher force ranging from 100 to 500 nN and the deformation of the GNCs until breakage was recorded in order to obtain the breaking force **(****Figure 8****).** After the compression test, AFM images were recorded to observe the resulting rupture of the polyurethane shell of the GNCs **(****Figure 9****).**

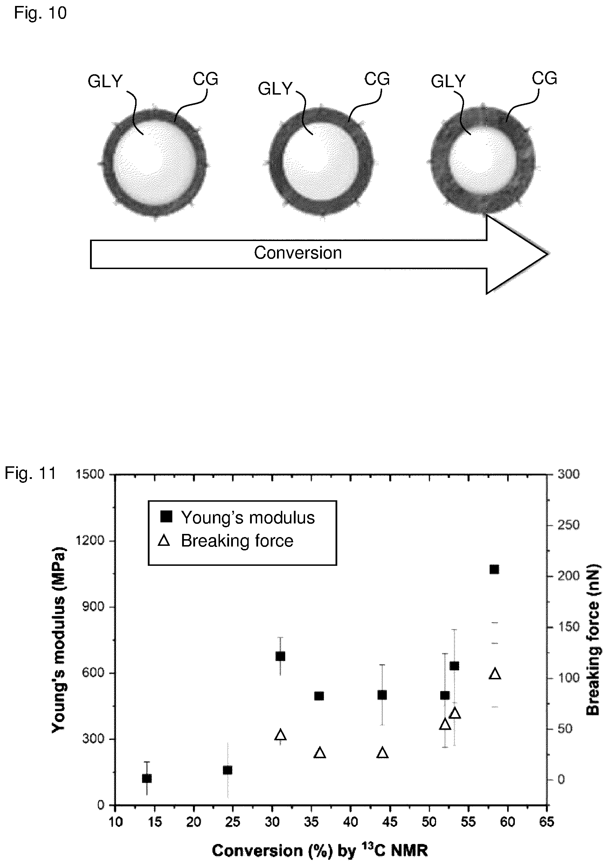

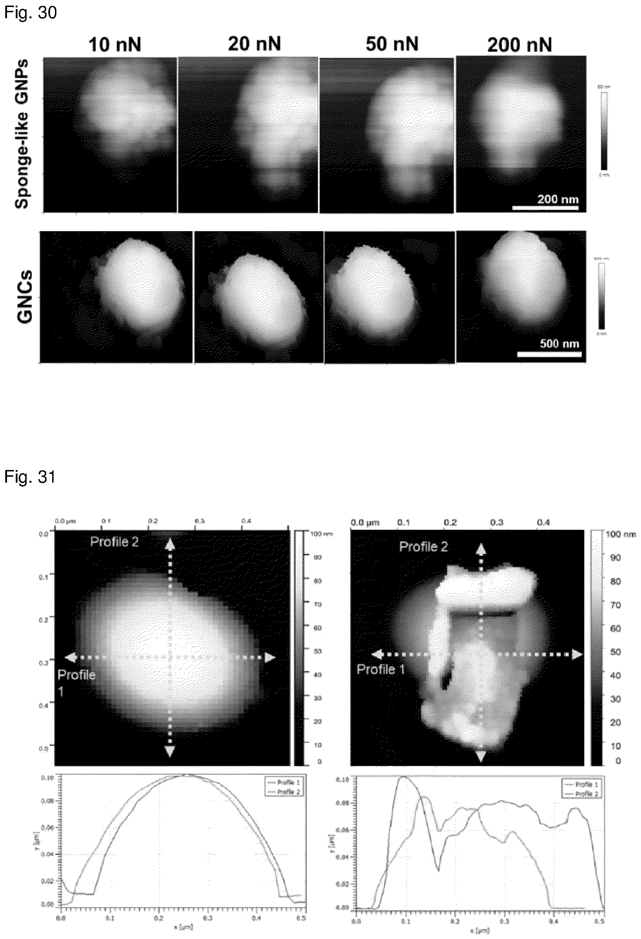

AFM images of GNCs prepared in PAO showed a clear hollow core-shell structure, in contrast to the sponge-like morphology of the glycerol particles prepared in toluene **(****Figures 30, 31**). Tuning the ratio of crosslinked glycerol shell to the payload of free glycerol yielded GNCs with different mechanical properties. **Figures 10, 11** revealed a good relationship between Young's modulus and breaking force obtained from AFM and the conversion of the GNCs. The Young's modulus of the GNCs increased from 150 to 1050 MPa when the conversion of the glycerol shell increased from 24% to 62%. Low conversion GNCs (31% to 43%) broke after applying a force of less than 50 nN. The breaking force increases linearly from 43% to 62% conversion of hydroxide groups. However, for GNCS with lower conversions (14% to 24%) no abrupt drop in force attributed to the capsules breaking could be noticed, as the soft shells were not fragile and deformed without breaking. Overall, the force required to break the GNCs increases while the elasticity decreases with the conversion. This demonstrates the possibility of modulating the mechano-responsive properties of the GNCs by controlling the conversion of the glycerol hydroxyl groups to urethane via the amount of crosslinker added.

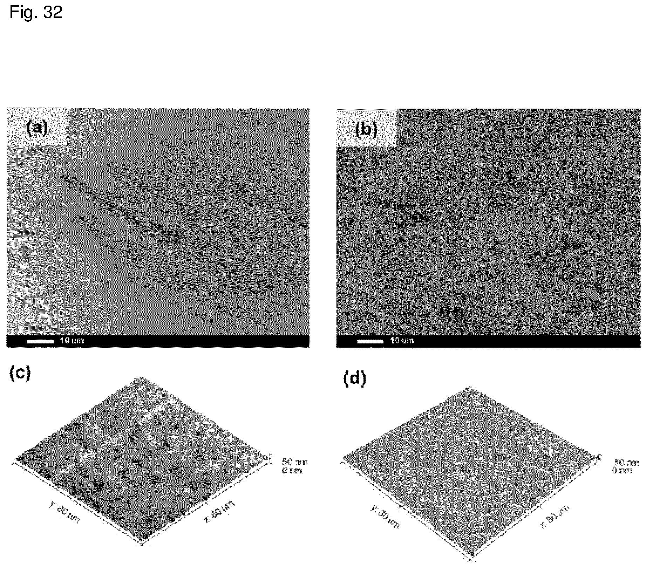

In the following performance of GNCs in reducing friction and wear at metal interfaces is described:
The mechanically triggered release of entrapped glycerol into PAO2 base oils can be controlled by tuning the mechanical properties of the GNCs, which are strongly linked to the performance in friction reduction at the metal interfaces. The tribological performance of GNCs in PAO2 on uncoated steel/steel and uncoated steel/Ta-C coated steel contacts was studied with a triborheometer with a ball-on-three-plates geometry. The surface topology of the steel plates was observed by SEM and AFM **(****Figure 32****).** During the measurement, the steel ball was pressed on three steel plates with a known axial force F, and Stribeck curves were recorded by cycling the rotation speed. After the measurement, the wear scars on the steel plate surfaces were analysed.

In the following application on uncoated steel/steel contacts is described.

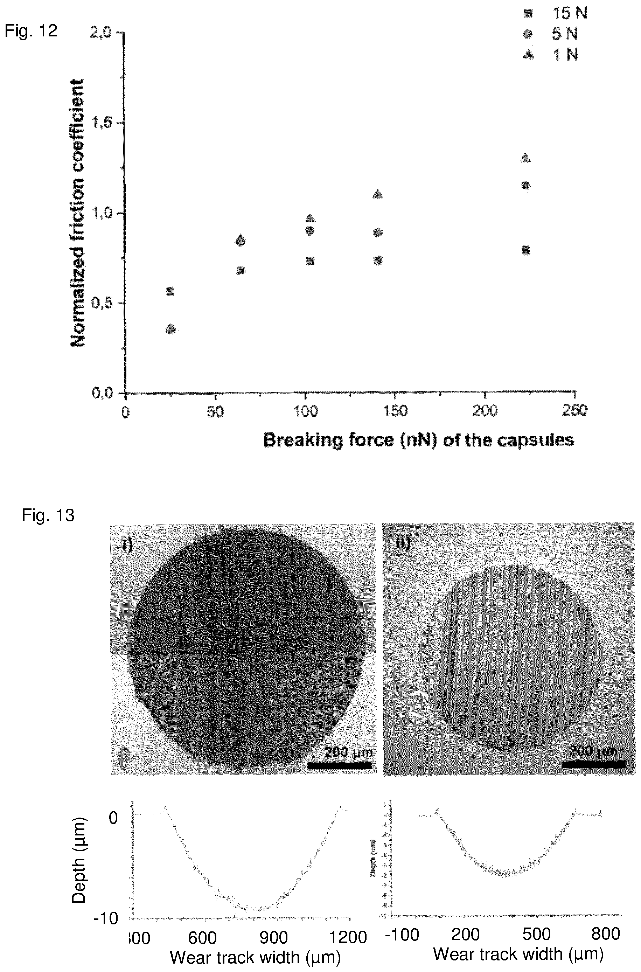

The normalized friction coefficients were influenced by the mechanical properties of the GNCs formulated in PAO2 **(****Figure 12****),** which are represented as breaking forces of the capsules measured by AFM. The test was conducted under different axial forces (1, 5, 15 N). A gradual increase in the normalized coefficient of friction (CoF) was observed as the breaking force of GNCs increased. This is due to the fact that as the capsules become harder, less pure glycerol could be released to lubricate the metal interfaces. However, the friction coefficients can be reduced if higher axial force are applied. This implies that high forces cause more capsule shells to fracture, which triggers the release of more glycerol to the metal contacts for lubrication. Moreover, ultra lubricity (CoF < 0.5) could be noticed when the soft capsules formulated in PAO2 were compressed at low axial force (1 and 5 N).

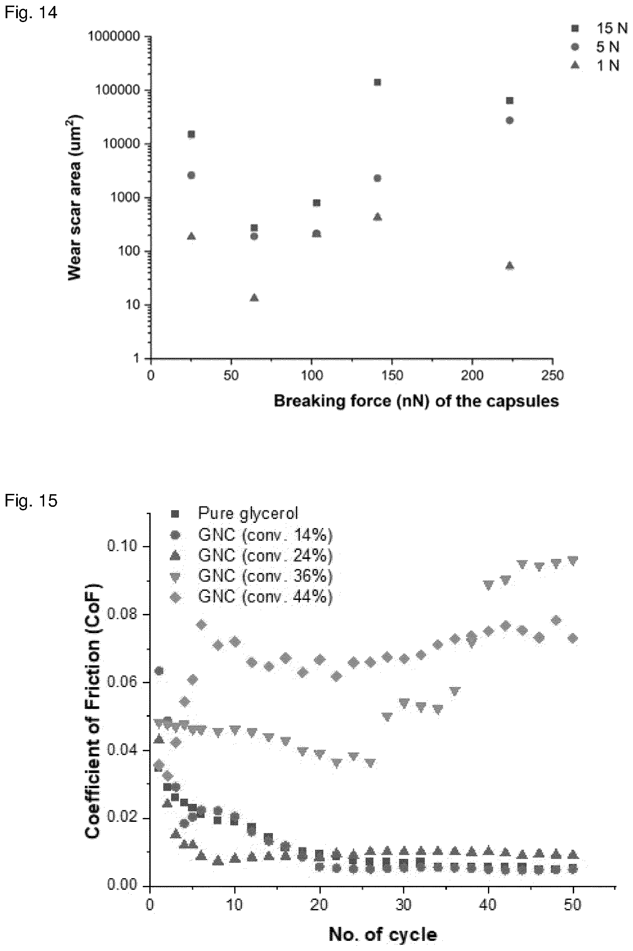

The wear scars were significantly reduced with the addition of the GNCs to PAO2 **(****Figure 13****).** Considering the wear tracks of PAO2 with different GNCs in **Figure 14****,** smaller wear areas were observed at lower axial force in all cases. However, there is no clear relationship between the mechanical properties of GNCs (breaking forces) and wear profiles at any of the axial forces. This suggests that in addition to the mechanical properties of the capsules, several factors may influence wear, including glycerol content, rolling and sliding of the capsules at the interfaces and shell residues present after compression.

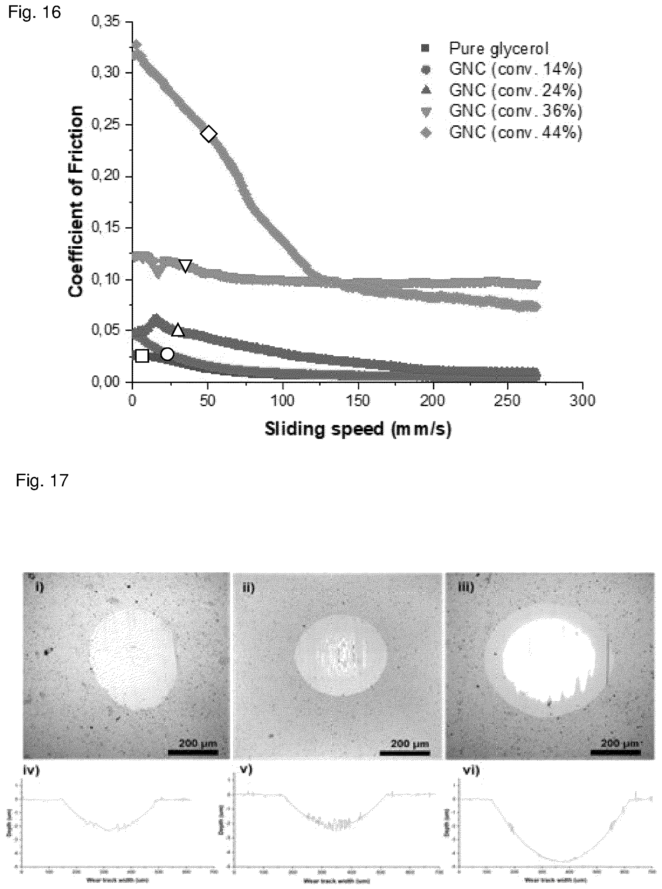

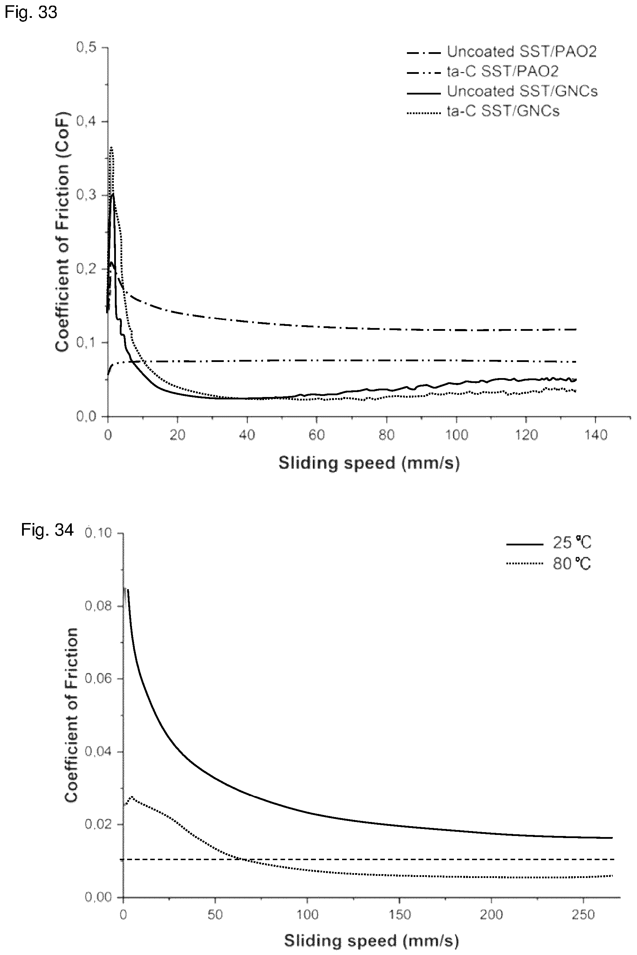

In the following application on steel/Ta-C coated steel contacts is described. Since superlubricity was observed for tetrahedral amorphous carbon (Ta-C) lubricated by glycerol,⁹ GNCs of different conversions dispersed in PAO2 were tested in comparison to pure glycerol by sliding a stainless steel (SST) ball against Ta-C coated steel plates in a ball-on-three-plates configuration **(****Figures 15****,** **16**)). The tests were conducted at 80 °C, as this was a suitable temperature to achieve superlubricity of pure glycerol on SST/ Ta-C coated steel tribopairs under the test conditions **(****Figure 34****).** The evolution over several Stribeck cycles shows that the CoFs gradually decrease due to the simultaneous release of glycerol into the base oils **(****Figure 15****).** The CoFs decreased further for softer GNCs, which were synthesized with less crosslinker, resulting in lower conversions (NCO:OH ratio). From now on, the 14 % conversion GNCs synthesized with the lowest crosslinker will be referred to as super soft GNCs. An impressive super low CoF < 0.01 was obtained under a mixed lubrication regime when pure glycerol and super soft GNCs dispersed in PAO2 were tested **(****Figure 16****).** This superlubricity state could be maintained in a stable manner over 20 Stribeck cycles. Moreover, these super soft GNCs in PAO2 showed the strongest wear-reducing effect **(****Figure 17****).** This might be due to the synergistic effect of lubricants and softshell residues forming a lubricating film that prevented direct contact of the tribopairs during the friction process. These results indicate that the proper design of GNCs, i.e., super soft shell with a high amount of unreacted glycerol, is required to achieve superlubricity and high performance in wear reduction on uncoated steel/Ta-C coated steel contacts.

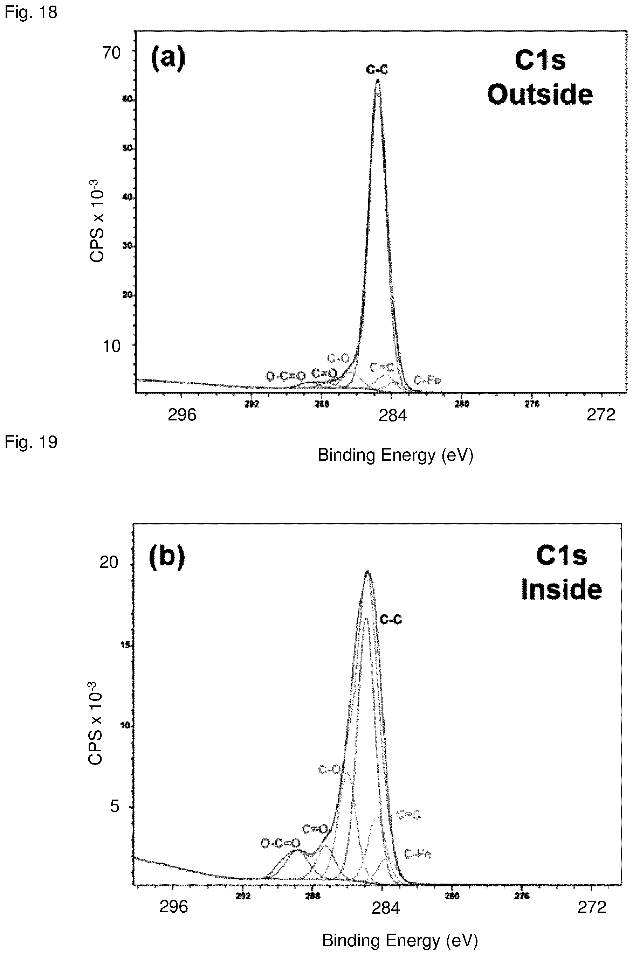

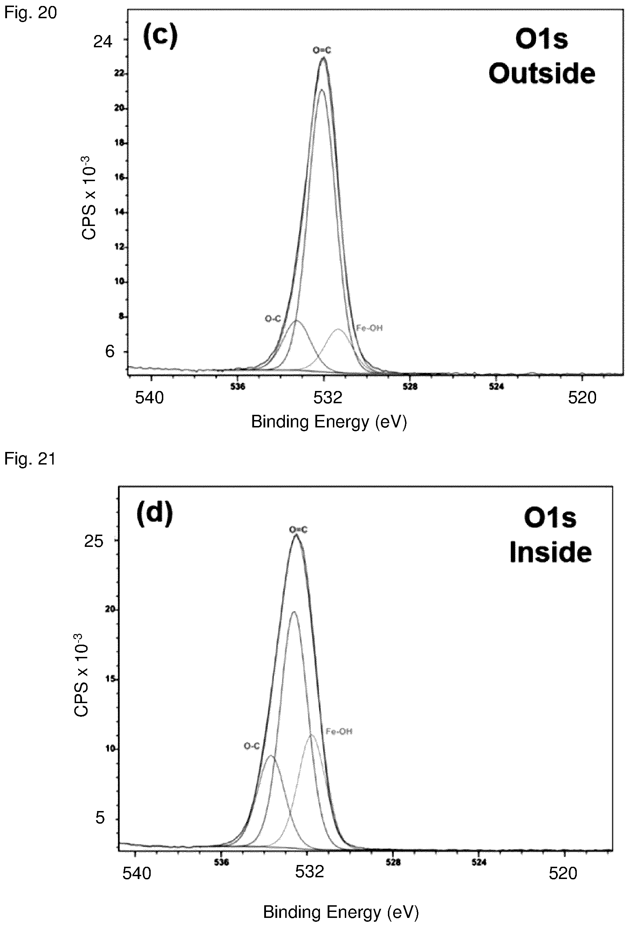

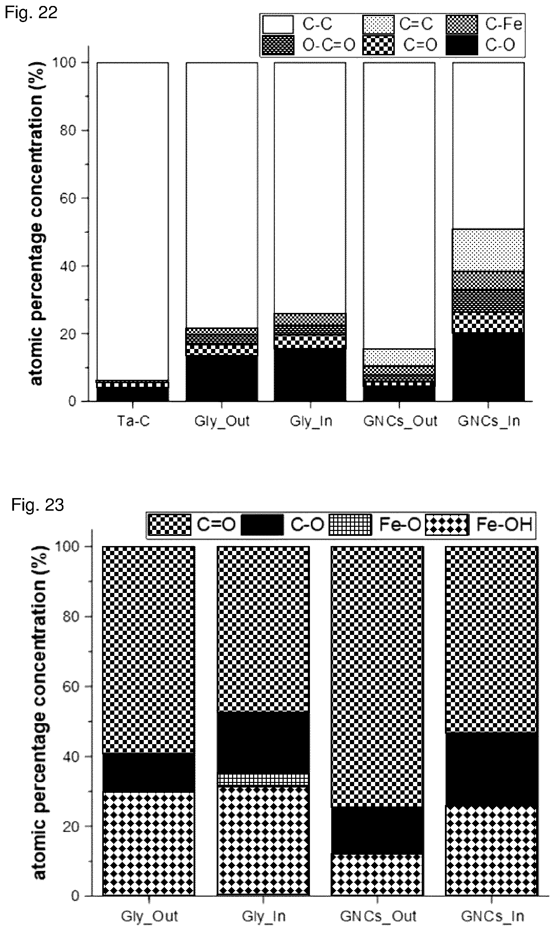

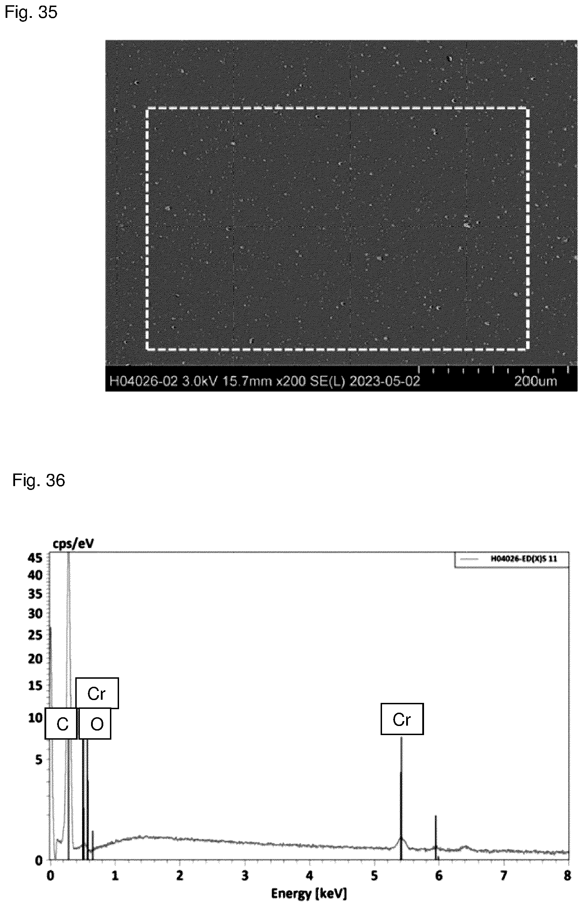

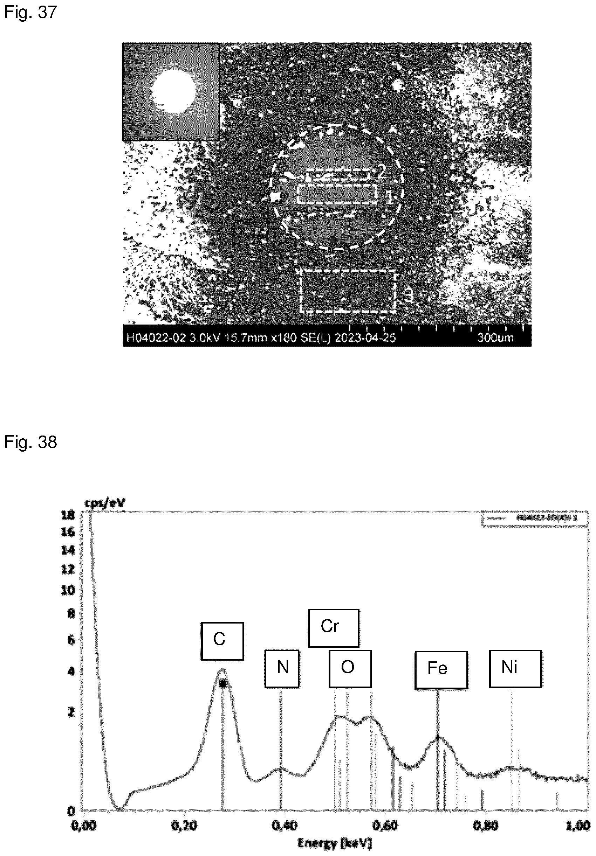

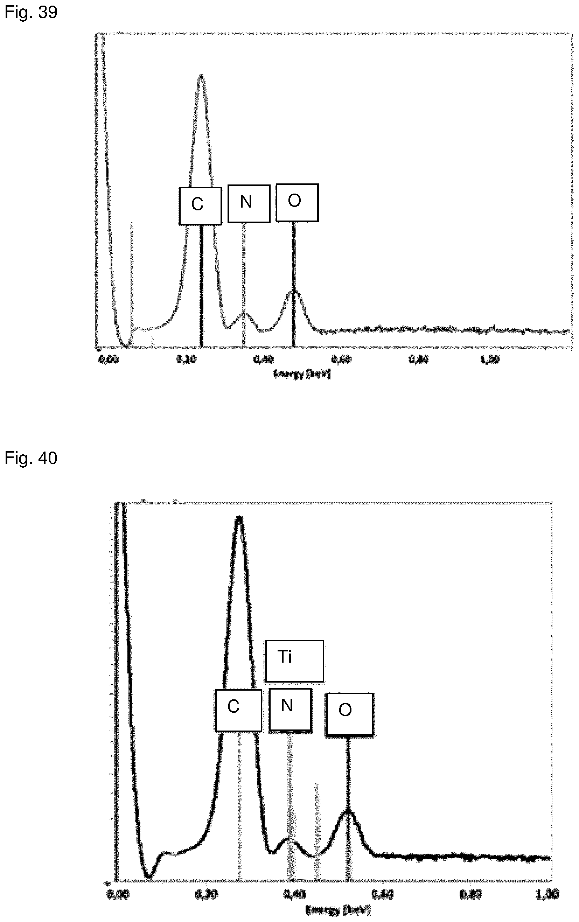

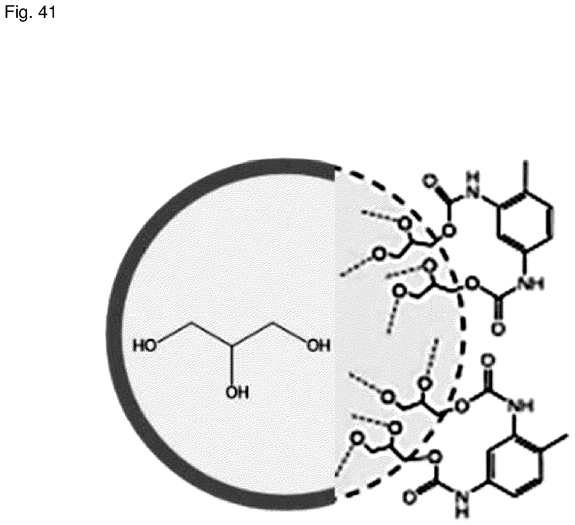

In order to understand the tribo-chemical reaction at the SST/Ta-C coated steel friction pair, XPS analysis was used to investigate the surface chemistry changes inside and outside of the wear scars on the Ta-C coated steel plates after the tribological tests. The full width at half maximum (FWHM) of the C-C/C=C peak inside the wear scar is considerably larger than outside of the wear scar **(****Figure 18, 19**). This revealed a significant layer of sp² carbon (graphitization of Ta-C) formed during the friction process.^{10, 12} **Figure 22, 23** summarizes the chemical species inside and outside the wear area after the tribological tests with pure glycerol and super soft GNCs in PAO2, with the Ta-C coated steel before the test as a control. When comparing the C1s and O1s peaks inside and outside of the wear scars as shown in **Figure 18- 21****,** strong contributions of C-O, C=O, O-C=O, and HO-C were observed inside the wear scar. The increment of oxygen containing species within the wear scars originates from the tribochemical reaction of glycerol with the Ta-C coated surface and its fragmented products.¹² Moreover, the increased C=C peak within the wear results from the crosslinked GNC shells and is a clear indication of GNCs accumulating at the tribological contact. This result was in good agreement with the SEM-EDS in **Figures** 35-41 showing a significant amount of N, C, O species inside the worn area. The Fe 2p spectrum observed inside the wear scar originated from the transfer of an oxidized layer from the SST ball during the friction process. This suggests that the etching of the counterpart (SST ball) occurred significantly more in pure glycerol than in the GNC system. For the lubrication of the SST/Ta-C coated steel tribopair with pure glycerol or GNCs, the results indicate the predominance of the chemical species originating from the tribo-reaction on the wear track to facilitate superlubricity.

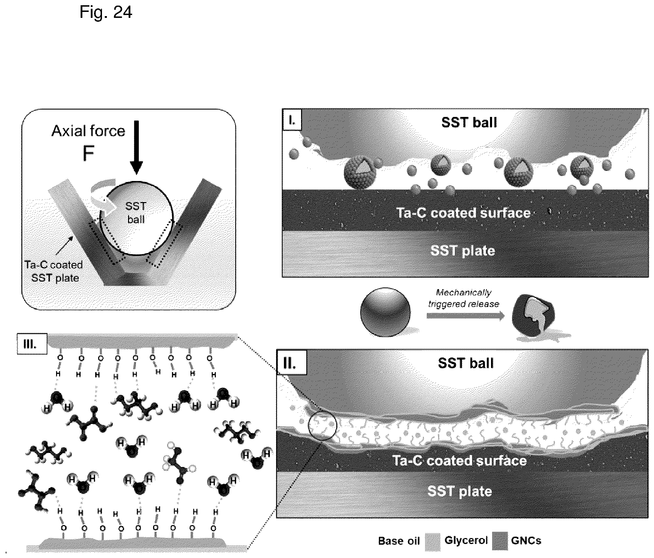

A possible mechanism for the superlubricity provided by the GNCs is proposed in **Figure 24****.** In a ball-on-three-plates configuration, a SST ball was slid against Ta-C coated SST plates in the presence of GNCs dispersed in PAO base oil as smart lubricants (I). During the friction process, the soft crosslinked shells of the GNCs were mechanically damaged and pure glycerol was released at the tribo-contact (II). Glycerol and its degradation products resulting from the tribochemical reaction adsorb on the Ta-C surface by hydrogen bonding, forming a nanometer-thick lubrication film (III). It has been reported that the degradation of glycerol molecules under the combined effects of pressure and shear generate aldehydes or organic acids and water molecules that contribute to the state of superlubricity. The sliding occurs through rapid changes of H-bond locations in the entity of the network. The hydrated layer between the two sliding layers acts as "low-friction brushes" and result in reduction in bearing load and reduction of the CoF. In addition, the graphitization of the Ta-C layer plays an important role in achieving superlubricity. For the super soft GNCs and the accumulation of not only the glycerol but also their shells on the sliding surface contribute to the process, the shell residue could slow down the etching of the coated surface and subsequently protect against wear. Overall, the excellent lubrication performance could be attributed to the solid-liquid synergistic lubrication effect between the Ta-C film and glycerol released from the mechanoresponsive GNCs.

Summarized a novel glycerol-based nano-additive for polyalphaolefin-based lubricants has been developed. The glycerol based nanocapsules are the first nanocapsules synthesized in-situ from highly viscous liquids as both the dispersed and the continuous phase in a miniemulsion system. It is demonstrated that the Young's modulus and the breaking force of the nanocapsules increase with the shell thickness. In consequence, the capsules with higher breaking forces (thicker shells) exhibit a higher coefficient of friction in the tribo-contact on both stainless steel and on Ta-C coated steel plates. The ultrasoft glycerol capsules (14% conversion) enable superlubricity when combined with Ta-C coatings with a CoF < 0.01.

A versatile approach is described to prepare smart nanocapsules additive directly inside liquid lubricant base oils, with the ability to tune shell softness and to achieve superlubricity on Ta-C coated steels. For the first time, glycerol nanocapsules (GNCs) were synthesized in-situ in highly viscous lubricant base oils, i.e., polyalphaolefin (PAO). The technique relies on polyaddition reaction occurring at the interfaces of glycerol droplets dispersed in PAO in a miniemulsion system leading to unreacted glycerol encapsulated in a shell of chemically crosslinked glycerol suspended in the lubricant base oil. The synthetic conditions were controlled to tune the amount of pure glycerol payload inside the capsules and the amount crosslinked glycerol by changing the reaction temperature and crosslinker content. AFM nanoindentation was used to determine the mechanical properties (i.e., Young's modulus and breaking force) of the crosslinked shell. The lubrication performance of these mechano-responsive glycerol capsules in PAO was studied on uncoated and Ta-C coated steel plates with ball-on-three plates tribo-rheometry. Superlubricity was achieved on stainless steel (SST)/ Ta-C coated steel tribo-pairs at a mixed lubrication regime when "ultra-soft" capsules were employed. Surface characterizations, e.g., XPS and SEM-EDS, were performed to identify the chemical species at the tribo-interfaces to elucidate the underlying mechanism of superlubricity of the smart lubrication system.

## Claims

1. Method for preparation of glycerol nanocapsules (GNCs), adapted as an additive in a hydrophobic lubricant for improving lubricity in a tribological system, comprising the steps of
- providing a continuous phase comprising at least a polyalphaolefin (PAO) and a dispersed phase comprising at least glycerol (GLY),
- mixing the continuous phase and the dispersed phase and performing high-pressure homogenization with a microfluidizer resulting in a minielmulsion comprising glycerol nanodroplets (GNPs),
- adding a diisocyanate crosslinking agent (TDI) to the miniemulsion leading to a polymerization reaction of the diisocyanate crosslinking agent (TDI) and glycerol (GLY) at the interfaces of the glycerol nanodroplets (GNPs) dispersed in the polyalphaolefin (PAO), resulting in formation of crosslinked glycerol-based polyurethan shells encapsulating a core of unreacted glycerol (GLY), thereby
- obtaining glycerol nanocapsules (GNCs) comprising a core of unreacted glycerol (GLY) encapsulated in a crosslinked glycerol-based polyurethan shell.

2. Method according to claim 1, wherein the polyalphaolefin (PAO) has a kinematic viscosity at 25 °C of at least 6 mPa·s.

3. Method according to claim 1 or 2, wherein mechanical properties of the glycerol nanocapsules (GNCs) are adjusted by varying a content of the diisocyanate crosslinking agent and/or varying the temperature of the polymerization reaction results in an altered core-to-shell ratio of the obtained glycerol nanocapsules (GNCs).

4. Method according to at least one of claims 1 to 3, wherein the content of the diisocyanate crosslinking agent is selected, so that the ratio of NCO-groups of the diisocyanate crosslinking agent and OH-groups of glycerol (NCO:OH ratio) is 0.2:1 to 1:1.

5. Method according to at least one of claims 1 to 4, wherein the diisocyanate crosslinking agent (TDI) is toluene diisocyanate.

6. Method according to at least one of claims 1 to 5, wherein the continuous phase further comprises a surfactant, which preferably is polyglycerol polyricinoleate (PGPR).

7. Method according to at least one of claims 1 to 6, wherein the dispersed phase further comprises water and calcium chloride (CaCl₂) mixed with the glycerol (GLY).

8. Method according to at least one of claims 1 to 7, wherein
- the mixture of the continuous phase and the dispersed phase is pre-emulsified before high-pressure homogenization is performed, preferably for 15 min by an UI-tra-Turrax at 15.000 rpm, and/or
- the high-pressure homogenization is performed at a pressure of 10.000 PSI for 2-3 cycles, and/or
- the miniemulsion is stirred, preferably at 450 rpm, before the diisocyanate crosslinking agent is added, and/or
- adding of the diisocyanate crosslinking agent (TDI) to the miniemulsion is performed dropwise, and/or
- the glycerol nanocapsules (GNC) are purified by centrifugation, preferably in two cycles at 2000 rpm for 10 min, to remove toluene and diisocyanate unreacted crosslinking agent (TDI) and then re-dispersed in a lubricant, preferably a polyalphaolefin (PAO).

9. Method according to at least one of claims 1 to 8, wherein temperature of the polymerization reaction ranges from 5 °C to 37 °C.

10. Glycerol nanocapsule (GNC) comprising a core of unreacted glycerol (GLY) encapsulated in a crosslinked glycerol-based polyurethan shell, wherein the glycerol nanocapsule (GNC) is producible by a method according toat least one of claims 1 to 9.

11. Use of glycerol nanocapsules (GNCs) according to claim 10 as an additive in a hydrophobic lubricant for improving lubricity in a tribological system.

12. Use according to claim 10, wherein the tribological system comprises surfaces with diamond-like carbon coatings, preferably tetrahedral amorphous carbon (Ta-C) coatings, wherein superlubricity is obtained by combining glycerol nanocapsules (GNCs) added in the lubricant and the diamond-like carbon coatings, preferably tetrahedral amorphous carbon (Ta-C) coatings.
